# EUROPÄISCHE PATENTANMELDUNG

(11) **EP 3 730 693 A1**
(43) Veröffentlichungstag der Anmeldung: **28.10.2020**
(21) Anmeldenummer: 20153488.0
(22) Anmeldetag: 24.01.2020
(51) Int. Cl.: D21F 7/08

(54) **PRESSFILZ MIT EINEM FADENGELEGE UND EINEM AUF DER MASCHINENSEITE ODER DER PAPIERSEITE DES FADENGELEGES VORGESEHENEN TRÄGERVLIES**

(30) Priorität: 24.04.2019 DE 202019102306 U
(71) Anmelder: Heimbach GmbH, 52353 Düren (DE)
(72) Erfinder: MOLLS, Christian, 52078 Aachen (DE); PIRIG, Jochen, 52385 Nideggen (DE); TELGMANN, Dieter, 52372 Kreuzau (DE)
(74) Vertreter: Albrecht, Ralf

(57) **Zusammenfassung**

Die Erfindung betrifft ein Pressfilz mit einem Fadengelege (1) und einem auf der Maschinenseite oder der Papierseite des Fadengeleges (1) vorgesehenen Trägervlies (3), wobei das Trägervlies (3) und das Fadengelege (1) durch eine dazwischenliegende Klebeschicht (2) miteinander verbunden sind, wobei das Trägervlies (3) eine Spinnvlieslage umfassend oder bestehend aus stoffschlüssig verbundenen Endlosfasern oder eine Spinnfaservlieslage umfassend oder bestehend aus stoffschlüssig verbundenen Stapelfasern aufweist oder daraus gebildet ist.

## Beschreibung

Die vorliegende Erfindung betrifft eine Papiermaschinenbespannung, und zwar einen Pressfilz mit einem Fadengelege und einem auf der Maschinenseite oder der Papierseite des Fadengeleges vorgesehenen Trägervlies, wobei das Trägervlies und das Fadengelege durch eine dazwischenliegende Klebeschicht miteinander verbunden sind.

Damit befasst sich die vorliegende Erfindung mit sogenannten ungewebten Pressenfilz-Modulen, wie sie von der Anmelderin angeboten werden. Derartige ungewebte Pressfilz-Module umfassen ein Fadengelege und eine Stützstruktur, welche ein Trägervlies aufweist, das mit dem Fadengelege durch eine dazwischenliegende Klebeschicht verbunden ist. Pressfilze dieser Art haben sich bewährt, da sich durch die Verwendung eines Fadengeleges eine hohe Entwässerungsleistung erzielen lässt. Des Weiteren lassen sich extrem feine und äußerst kompakte Oberflächen gestalten.

Gleichzeitig ermöglichen offene Strukturen derartiger Pressfilze die Aufrechterhaltung des Speichervolumens und zudem eine besonders effektive Reinigung des Pressfilzes.

Die Bestrebungen gehen dahin, die bestehenden ungewebten Pressfilz-Module und daraus herzustellenden Pressfilze weiter zu verbessern. Entsprechend besteht die Aufgabe der vorliegenden Erfindung darin, Pressfilze der vorgenannten Art so auszugestalten, dass diese eine verbesserte Entwässerungsleistung kombiniert mit einer hohen Festigkeit und geringer Markierungsneigung bieten.

Diese Aufgabe ist erfindungsgemäß dadurch gelöst, dass das Trägervlies des Fadengeleges umfassend oder bestehend aus stoffschlüssig verbundenen Endlosfasern, d.h. Filamenten, oder eine Spinnfaservlieslage umfassend oder bestehend aus stoffschlüssig verbundenen Stapelfasern aufweist oder daraus gebildet ist.

Der Erfindung liegt somit die Überlegung zugrunde, für das Fadengelege ein Trägervlies einzusetzen, das eine Spinnvlieslage oder eine Spinnfaservlieslage umfasst, die aus stoffschlüssig verbundenen Fasern - nämlich Endlosfasern (Filamenten) im Falle einer Spinnvlieslage und Stapelfasern im Falle einer Spinnfaservlieslage - besteht oder diese aufweist. Bevorzugt sollte der Anteil der Endlosfasern beziehungsweise Stapelfasern in der jeweiligen Vlieslage wenigstens 80 Gew.-% ausmachen. Durch die erfindungsgemäße Ausgestaltung des Trägervlieses mit einer solchen Spinnvlieslage oder Spinnfaservlieslage erhält das Fadengelege auch bei Realisierung sehr geringer Trägervlies-Dicken und -Flächengewichte eine ausreichende Stabilität, die eine optimale Verarbeitbarkeit des ungewebten Pressfilz-Moduls gewährleistet.

Gemäß einer Ausführungsform der vorliegenden Erfindung ist das Trägervlies thermisch verfestigt. Insbesondere kann die thermische Verfestigung des Trägervlieses punktuell erfolgen, alternativ ist eine Verfestigung über die komplette Fläche des Trägervlieses möglich. Durch die thermische Verfestigung, die z.B. über Ultraschall-Schweißverfahren oder Kalandrier-Verfahren erzeugt werden kann, lässt sich die gewünschte Festigkeit des Trägervlieses gezielt einstellen. Das Trägervlies kann dabei in bevorzugter Weise Bikomponenten-Fasern aufweisen oder aus solchen gebildet sein, wobei insbesondere Kern-Mantel-Fasern zum Einsatz kommen können.

In Ausgestaltung der Erfindung ist vorgesehen, dass die Endlosfasern der Spinnvlieslage bzw. die Stapelfasern der Spinnfaservlieslage aus Polyamid bestehen und/oder Faserfeinheiten im Bereich von 1 dtex bis 11 dtex aufweisen.

Das Trägervlies besitzt bevorzugt ein Flächengewicht von 10 - 120 g/m², insbesondere 30 - 90 g/m² und bevorzugt 50 - 60 g/m². Ferner kann das Trägervlies eine Dicke im Bereich von 0,1 - 0,9 mm, insbesondere 0,45 mm aufweisen.

Soweit eine Spinnfaservlieslage zum Einsatz kommt, besitzen die Stapelfasern gemäß einer Ausführungsform der Erfindung eine Stapellänge im Bereich von 20 - 100 mm, insbesondere im Bereich von 35 - 80 mm und bevorzugt von 60 mm. Alternativ können Fasermischungen aus Stapelfasern unterschiedlicher Stapellängen vorgenannter Größenordnungen verwendet werden (Variostapel).

Das Fadengelege kann als Längsfadengelege oder als Querfadengelege ausgebildet sein. Ein Längsfadengelege bringt dabei den Vorteil mit sich, dass Zugkräfte gut aufgenommen werden können, so dass ein hohes Festigkeitspotential und damit wirtschaftliche Standzeiten erzielt werden können. Querfadengelege sorgen für eine erhöhte Querfestigkeit und Breitenstabilität des Pressfilzes.

Gemäß einer Ausführungsform der Erfindung ist das Fadengelege aus Multifilament-Zwirnen gebildet, wobei diese bevorzugt als einstufige Mehrfach-Zwirne ausgebildet sein können. In diesem Fall weisen die Multifilament-Zwirne insbesondere zwei oder drei Multifilament-Vorzwirne aus jeweils 13 - 300 Einzelfilamenten auf, die miteinander zu den Multifilament-Vorzwirnen verdreht sind. Dabei besitzen die Einzelfilamente bevorzugt eine Stärke im Bereich von 1,5 - 67dtex.

Alternativ ist es möglich, das Fadengelege aus Monofilament-Zwirnen zu bilden, wobei diese bevorzugt als zweistufige Mehrfach-Zwirne ausgebildet sein können. In diesem Fall weisen die Monofilament-Zwirne bevorzugt drei bis zwölf Monofilamente insbesondere der Stärke 0,1 mm auf, die in einem ersten Vorgang miteinander zu Monofilament-Vorzwirnen verdreht sind, wobei jeweils insbesondere zwei oder drei dieser Monofilament-Vorzwirne in einem zweiten Vorgang miteinander verzwirnt sind.

Unabhängig davon, ob das Fadengelege aus Multifilament- oder Monofilament-Zwirnen gebildet ist, ist in weiterer Ausgestaltung der Erfindung vorgesehen, dass die Fadendichte des Fadengeleges zwischen 100 und 140 Zwirne/10 cm, insbesondere zwischen 110 und 130 Zwirne/10 cm liegt und bevorzugt 120 Zwirne/10 cm beträgt. Dabei können die Einzelfilamente der Multifilament-Zwirne beziehungsweise die einzelnen Monofilamente der Monofilament-Zwirne einen kreisförmigen Querschnitt oder einen abgeflachten Querschnitt, insbesondere einen ovalen/elliptischen Querschnitt, aufweisen.

Gemäß einer Ausführungsform der Erfindung ist vorgesehen, dass auf der dem Fadengelege gegenüberliegenden Seite des Trägervlieses ein Träger, insbesondere in Form eines Gewebes, eines Gewirkes, eines Gliederbandes oder in Form eines aus einem helixartig aufgewundenen Materialstreifen dieser Textilien hergestellten Flächengebildes vorgesehen ist.

Alternativ kann das ungewebte Pressfilz-Modul genau umgekehrt zu einem Träger platziert werden, so dass auf der dem Trägervlies gegenüberliegenden Seite des Fadengeleges ein Träger, insbesondere in Form eines Gewebes, eines Gewirkes, eines Gliederbandes oder in Form eines aus einem helixartig aufgewundenen Materialstreifen dieser Textilien hergestellten Flächengebildet vorgesehen ist.

Eine weitere erfindungsgemäße Ausführungsform sieht vor, dass auf der dem Fadengelege gegenüberliegenden Seite des Trägervlieses und/oder auf der dem Trägervlies gegenüberliegenden Seite des Fadengeleges, insbesondere auf der nach außen weisenden Seite eines auf das Trägervlies bzw. direkt auf das Fadengelege aufgebrachten Trägers, mindestens eine Faservliesvorlage, insbesondere in Form eines kardierten Spinnfaservlieses angeordnet ist.

Schließlich kann das Trägervlies in bevorzugter Weise als Sperrvlies ausgebildet sein, welches das Durchnadeln von Stapelfasern aus Faservliesen zur Maschinenseite beim Vernadeln behindert.

Hinsichtlich weiterer Ausgestaltungen der Erfindung wird auf die nachfolgende Beschreibung eines Ausführungsbeispiels unter Bezugnahme auf die Zeichnung verwiesen. In der Zeichnung zeigt
- Figur 1: den Aufbau einer ersten Ausführungsform eines Pressfilzes gemäß der vorliegenden Erfindung mit vereinzelten Schichten,
- Figuren 2a) bis c): Ausführungsformen von Monofilament-Vorzwirnen bestehend aus acht miteinander verdrehten Monofilamenten abgeflachten Querschnitts,
- Figuren 3a) bis c): Ausführungsformen von Monofilament-Vorzwirnen bestehend aus acht miteinander verdrehten Monofilamenten kreisförmigen Querschnitts,
- Figuren 4a) bis c): Anordnungen von Monofilament-Zwirnen mit jeweils zwei miteinander verzwirnten Monofilament-Vorzwirnen der in den Figuren 2a) bis c) dargestellten Art,
- Figuren 5a) bis c): Anordnungen von Monofilament-Zwirnen mit jeweils zwei miteinander verzwirnten Monofilamenten-Vorzwirnen der in den Figuren 3a) bis c) gezeigten Art, und
- Figur 6: einen alternativen Aufbau eines Pressfilzes gemäß der vorliegenden Erfindung mit vereinzelten Schichten.

In der Zeichnung ist eine erste Ausführungsform eines Pressfilzes gemäß der vorliegenden Erfindung dargestellt, der insbesondere für die Herstellung grafischer Papiere und im Tissue-Bereich zur Entwässerung einer Papierbahn eingesetzt werden kann. Der Pressfilz umfasst ein Fadengelege 1, ein auf der Papierseite des Fadengeleges 1 vorgesehenes und mit ihm über eine Klebeschicht 2 verbundenes Trägervlies 3, einen auf der dem Fadengelege 1 gegenüberliegenden Seite (der Papierseite) des Trägervlieses 3 vorgesehenen Träger 4 in der Form eines Träger-Gewebes, und ein auf der Papierseite des Trägers 4 vorgesehenes kardiertes Spinnfaservlies 5. Die in dieser Weise übereinander geschichteten Pressfilzlagen sind miteinander durch Vernadeln verbunden. Dabei übernimmt das Trägervlies 3 die Funktion eines Sperrvlieses, das ein Durchnadeln von Stapelfasern aus dem Spinnfaservlies 5 zur Maschinenseite verhindert.

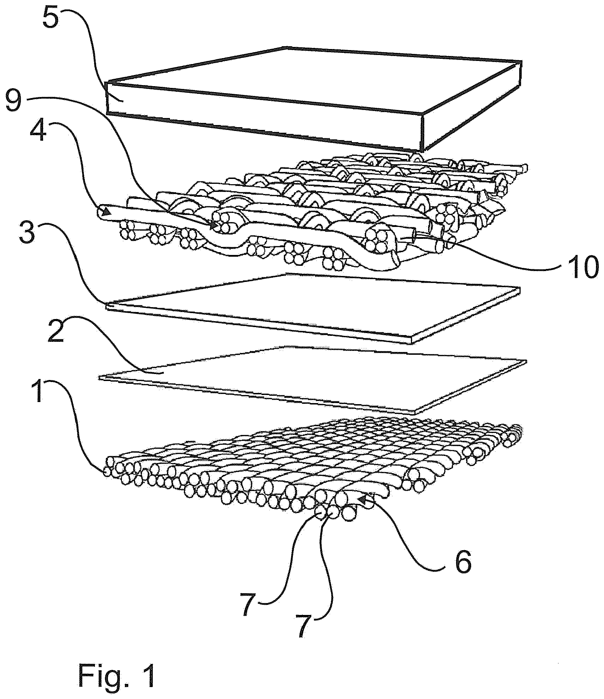

Das Fadengelege 1 ist hier ein Längsfadengelege, sodass es zur Aufnahme von Zugkräften gut geeignet ist und damit ein hohes Festigkeitspotential besitzt. Das Fadengelege 1 ist aus Monofilament-Zwirnen 6 gebildet, die als zweistufige Mehrfach-Zwirne ausgebildet sind. Konkret umfassen die Monofilament-Zwirne 6 der in Figur 1 gezeigten Anordnung jeweils drei Monofilament-Vorzwirne 7, die jeweils drei bis zwölf Monofilamente 8 aufweisen, welche miteinander zu den Monofilament-Vorzwirnen 7 verdreht sind.

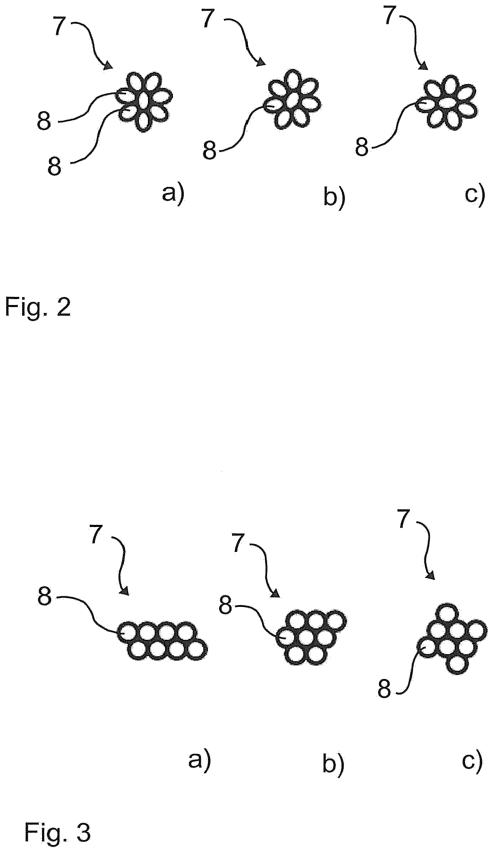

In den Figuren 2a) bis c) und 3a) bis c) sind Beispiele solcher Monofilament-Vorzwirne 7 dargestellt, wobei die Monofilament-Vorzwirne 7 der Figur 2 jeweils acht Monofilamente 8 mit ovalem/elliptischem Querschnitt aufweisen, während in der Figur 3 Monofilament-Vorzwirne 7 bestehend aus acht Monofilamenten 8 kreisförmigen Querschnitts dargestellt sind.

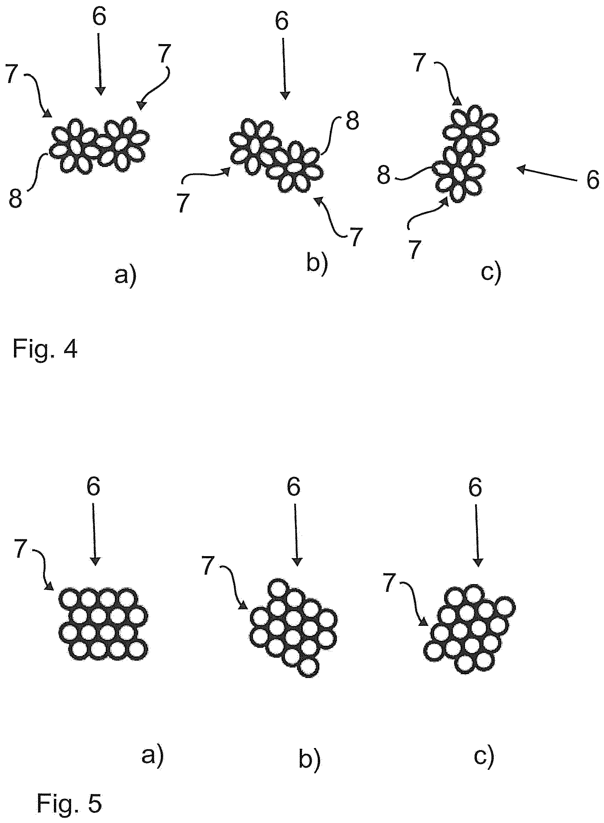

Die Figuren 4a) bis c) zeigen Anordnungen von Monofilament-Zwirnen 6 allerdings mit jeweils nur zwei miteinander verzwirnten Monofilament-Vorzwirnen 7 der in den Figuren 2a) bis c) dargestellten Art, während die Figuren 5a) bis c) Anordnungen von Monofilament-Zwirnen 6 mit ebenfalls jeweils zwei miteinander verzwirnten Monofilament-Vorzwirnen 7 der in den Figuren 3a) bis c) dargestellten Art zeigen. Die einzelnen Monofilamente 8 weisen dabei jeweils eine Stärke von 0,1 mm auf.

Die Fadendichte des Fadengeleges 1 ist hier so gewählt, dass sie 120 Zwirne/10 cm beträgt.

Das Trägervlies 3 ist als Spinnvlies oder als Spinnfaservlies ausgebildet. Im dargestellten Ausführungsbeispiel ist das Trägervlies 3 als Spinnfaservlies ausgebildet und besteht aus Stapelfasern mit einer Stapellänge von 60 mm, wobei eine Stapelfasermischung aus Polyamid (PA) der Faserfeinheiten 3,3 dtex und 5 dtex zum Einsatz kommt. Das Spinnfaservliesgewicht liegt bei 50 - 60 g/m².

Der als Träger-Gewebe ausgebildete Träger 4 besitzt Längsfäden 9, welche als Monofilament-Zwirne ausgebildet sind. Wie in der Figur 1 erkennbar ist, werden diese jeweils aus vier miteinander verzwirnten Monofilamenten der Stärke 0,2 mm gebildet. Die Querfäden 10 des Träger-Gewebes sind als Monofilamentfäden der Stärke 0,3 mm ausgebildet.

Das papierseitig vorgesehene kardierte Spinnfaservlies 5 besteht aus Stapelfasern mit einer Faserfeinheit zwischen 3,2 und 100 dtex und einem Vliesgewicht von 100 - 500 g/m².

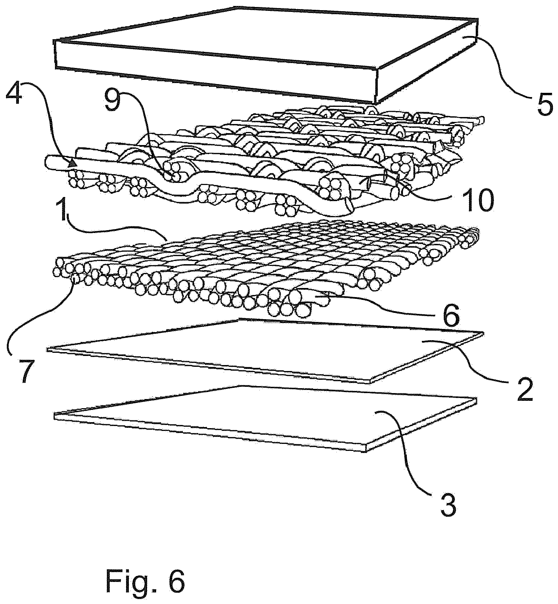

In Figur 6 ist ein weiterer Pressfilz gemäß der vorliegenden Erfindung dargestellt. Dieser umfasst wie der Pressfilz gemäß der ersten Ausführungsform ein Fadengelege 1, ein mit dem Fadengelege 1 über eine Klebeschicht 2 verbundenes Trägervlies 3, einen Träger 4 in der Form eines Trägergewebes und ein auf der Papierseite des Trägers 4 vorgesehenes kardiertes Spinnfaservlies 5. Im Unterschied zu der ersten Ausführungsform ist das Trägervlies 3 auf der Maschinenseite des Fadengeleges 1 positioniert und mit dem Fadengelege 1 über die dazwischen vorgesehene Klebeschicht 2 verbunden. Der Träger 4 mit dem darauf vorgesehenen Spinnfaservlies 5 ist auf der Papierseite des Fadengeleges 1 vorgesehen. Die in dieser Weise übereinander geschichteten Pressfilzlagen sind miteinander durch Vernadeln verbunden. Im Übrigen gelten hinsichtlich der Ausgestaltungen der einzelnen Schichten die Ausführungen zu der ersten Ausführungsform.

### Bezugszeichenliste

- 1: Fadengelege
- 2: Klebeschicht
- 3: Trägervlies
- 4: Träger
- 5: kardiertes Spinnfaservlies
- 6: Monofilament-Zwirne
- 7: Monofilament-Vorzwirne
- 8: Monofilamente
- 9: Längsfäden
- 10: Querfäden

## Patentansprüche

1. Pressfilz mit einem Fadengelege (1) und einem auf der Maschinenseite oder der Papierseite des Fadengeleges (1) vorgesehenen Trägervlies (3), wobei das Trägervlies (3) und das Fadengelege (1) durch eine dazwischenliegende Klebeschicht (2) miteinander verbunden sind, **dadurch gekennzeichnet, dass** das Trägervlies (3) eine Spinnvlieslage umfassend oder bestehend aus stoffschlüssig verbundenen Endlosfasern oder eine Spinnfaservlieslage umfassend oder bestehend aus stoffschlüssig verbundenen Stapelfasern aufweist oder daraus gebildet ist.

2. Pressfilz nach Anspruch 1, **dadurch gekennzeichnet, dass** das Trägervlies (3) thermisch verfestigt ist, und/oder dass das Trägervlies (3) punktuell oder über die komplette Fläche des Trägervlieses (3) thermisch verfestigt ist.

3. Pressfilz nach einem der vorherigen Ansprüche, **dadurch gekennzeichnet, dass** das Trägervlies (3) Bikomponenten-Fasern, insbesondere Kern-Mantel-Fasern, enthält oder aus diesen besteht, und/oder dass die Endlosfasern der Spinnvlieslage bzw. die Stapelfasern der Spinnfaservlieslage aus Polyamid bestehen und/oder Faserfeinheiten im Bereich von 1 dtex bis 11 dtex aufweisen.

4. Pressfilz nach einem der vorherigen Ansprüche, **dadurch gekennzeichnet, dass** das Trägervlies (3) ein Flächengewicht von 10 - 120 g/m², insbesondere 30 - 90 g/m² und bevorzugt 50 - 60 g/m² aufweist, und/oder dass das Trägervlies (3) eine Dicke im Bereich von 0,1 bis 0,9 mm, insbesondere 0,45 mm aufweist, und/oder dass die Stapelfasern der Spinnfaservlieslage eine Stapellänge von 20 - 100 mm, insbesondere im Bereich von 35 - 80 mm und bevorzugt 60 mm besitzen, und/oder dass das Fadengelege (1) als Längsfadengelege oder als Querfadengelege ausgebildet ist.

5. Pressfilz nach einem der vorherigen Ansprüche, **dadurch gekennzeichnet, dass** das Fadengelege (1) aus Multifilament-Zwirnen gebildet ist.

6. Pressfilz nach Anspruch 5, **dadurch gekennzeichnet, dass** die Multifilament-Zwirne als Mehrfach-Zwirne ausgebildet sind.

7. Pressfilz nach Anspruch 6, **dadurch gekennzeichnet, dass** die Multifilament-Zwirne als einstufige Mehrfach-Zwirne ausgebildet sind, die insbesondere zwei oder drei Multifilament-Vorzwirne aus jeweils 13 - 300 Einzelfilamenten aufweisen, die miteinander zu den Multifilament-Vorzwirnen verdreht sind, wobei die Einzelfilamente bevorzugt eine Stärke im Bereich von 1,5 - 67 dtex besitzen.

8. Pressfilz nach einem der Ansprüche 1 bis 4, **dadurch gekennzeichnet, dass** das Fadengelege (1) aus Monofilament-Zwirnen (6) gebildet ist.

9. Pressfilz nach Anspruch 8, **dadurch gekennzeichnet, dass** die Monofilament-Zwirne (6) als Mehrfach-Zwirne ausgebildet sind.

10. Pressfilz nach Anspruch 9, **dadurch gekennzeichnet, dass** die Monofilament-Zwirne (6) als mehrstufige, insbesondere zweistufige Mehrfach-Zwirne ausgebildet sind, die drei bis zwölf Monofilamente (8) insbesondere der Stärke 0,1 mm aufweisen, welche in einem ersten Vorgang miteinander zu Monofilament-Vorzwirnen (7) verdreht sind, wobei jeweils insbesondere zwei oder drei dieser Monofilament-Vorzwirne (7) in einem zweiten Vorgang miteinander verzwirnt sind.

11. Pressfilz nach einem der Ansprüche 5 bis 10, **dadurch gekennzeichnet, dass** die Fadendichte des Fadengeleges (1) zwischen 100 und 140 Zwirne/10 cm, insbesondere zwischen 110 und 130 Zwirne/10 cm liegt und bevorzugt 120 Zwirne/10 cm beträgt, und/oder dass die Einzelfilamente der Multifilament-Zwirne und/oder die einzelnen Monofilamente (8) der Monofilament-Zwirne (6) einen kreisförmigen Querschnitt oder einen abgeflachten Querschnitt, insbesondere einen ovalen/elliptischen Querschnitt, aufweisen.

12. Pressfilz nach einem der vorherigen Ansprüche, **dadurch gekennzeichnet, dass** auf der dem Fadengelege (1) gegenüberliegenden Seite des Trägervlieses (3) ein Träger (4), insbesondere in Form eines Gewebes, eines Gewirkes, eines Gliederbandes oder in Form eines aus einem helixartig aufgewundenen Materialstreifen dieser Textilien hergestellten Flächengebildes vorgesehen ist.

13. Pressfilz nach einem der vorherigen Ansprüche, **dadurch gekennzeichnet, dass** auf der dem Trägervlies (3) gegenüberliegenden Seite des Fadengeleges (1) ein Träger (4), insbesondere in Form eines Gewebes, eines Gewirkes, eines Gliederbandes oder in Form eines aus einem helixartig aufgewundenen Materialstreifen dieser Textilien hergestellten Flächengebildes vorgesehen ist.

14. Pressfilz nach einem der vorherigen Ansprüche, **dadurch gekennzeichnet, dass** auf der dem Fadengelege (1) gegenüberliegenden Seite des Trägervlieses (3) und/oder auf der dem Trägervlies (3) gegenüberliegenden Seite des Fadengeleges (1), insbesondere auf der nach außen weisenden Seite eines auf das Trägervlies (3) bzw. auf das Fadengelege (1) aufgebrachten Trägers (4), mindestens eine Faservlieslage, insbesondere ein kardiertes Spinnfaservlies (5) vorgesehen ist.

15. Pressfilz nach einem der vorherigen Ansprüche, **dadurch gekennzeichnet, dass** das Trägervlies (3) als Sperrvlies ausgebildet ist, welches das Durchnadeln von Stapelfasern aus Faservliesen zur Maschinenseite beim Vernadeln behindert.
